# EUROPEAN PATENT SPECIFICATION

(11) **EP 1 551 667 B1**
(45) Date of publication and mention of the grant of the patent: **16.04.2008**
(21) Application number: 03808841.5
(22) Date of filing: 15.10.2003
(51) Int. Cl.: B60R 1/06, B60R 1/066, B60R 1/072, B60R 1/074

(54) **REARVIEW MIRROR ASSEMBLY**
RÜCKSPIEGELANORDNUNG
ENSEMBLE RETROVISEUR

(30) Priority: 15.10.2002 US 418652 P
(43) Date of publication of application: 13.07.2005
(73) Proprietor: Visiocorp Patents S.à.r.l., 2346 Luxembourg (LU)
(72) Inventor: DUMONT, Daniel, F-77250 Veneux les Sablons (FR)
(74) Representative: Rausch, Gabriele
(86) International application number: PCT/IB2003/005071
(87) International publication number: WO 2004/035351

(56) References cited:
- EP-A- 1 038 730
- WO-A-96/23676
- WO-A-02/076791
- US-A- 4 636 045
- US-A1- 2002 145 816

## Description

The present invention relates to a rearview mirror assembly with a bracketless mounting feature for attaching the mirror assembly to a side of a vehicle, and, more particularly, the present invention relates to a rearview mirror assembly with a mounting feature adaptable for various adjustment mechanisms.

Traditional side rearview mirror assemblies are expensive and difficult to assembly in a mass-manufacturing environment. They require a mounting bracket that attaches a housing of the mirror assembly to a side of a motor vehicle. This bracket adds to the overall cost of the mirror assembly. Additionally, the design of the bracket becomes specific to one particular vehicle since it is an exterior trim piece and must cooperate with the overall design scheme of the vehicle. Creating different brackets for different vehicles also adds to the cost of the mirror assembly.

In addition to the bracket having a specific design for aesthetic reasons, the bracket may also vary in its design to accommodate different mirror adjustment mechanisms. Today, some vehicles use a manual adjustment mechanism with a simple handle extending from the mirror to the interior of the vehicle. Higher priced vehicles include electrically adjustable side rearview mirrors. These higher priced vehicles use additional components to adjust the mirror. Depending upon which adjustment mechanism is desired in the vehicle, a separate mounting bracket would be necessary to accommodate the necessary components of each adjustment mechanism. Again, the need for different brackets adds to the cost of the vehicle.

Also, the use of a mounting bracket makes the assembly of the mirror to the vehicle difficult and time consuming. An assembly that would eliminate the use of a mounting bracket is highly desired.

There remains a need in the automotive industry for a side rearview mirror assembly that is inexpensive to manufacture, yet easy to assemble and able to accommodate a variety of adjustment mechanisms. The present invention, as described below, fulfills each of these needs.

US 4,636,045 discloses the pre-characterising portion of claim 1.
The invention is defined in the claims.

A further understanding of the present invention will be had in view of the description of the drawings and detailed description of the invention, when viewed in conjunction with the subjoined claims.

Other advantages of the present invention will be readily appreciated as the same becomes better understood by reference to the following detailed description when considered in connection with the accompanying drawings wherein:

Figure 1 is a perspective view of a motor vehicle with a mirror assembly of the subject invention;

Figure 2 is an exploded view of the mirror assembly with a handle adjustment mechanism for manual adjustment of a mirror;

Figure 3 is an exploded view of the mirror assembly with a harness adjustment mechanism for electrical adjustment of the mirror;

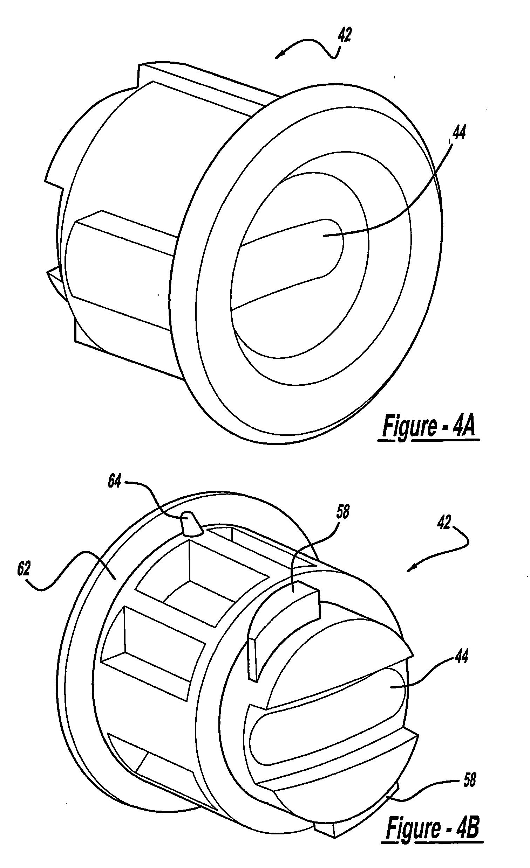

Figure 4A is an outer perspective view of a connector of the mirror assembly;

Figure 4B is an inner perspective view of the connector of the mirror assembly;

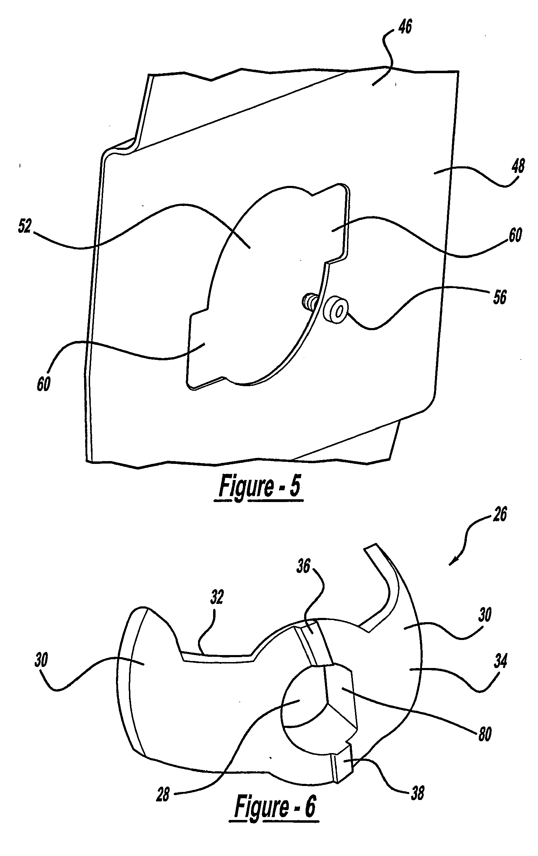

Figure 5 is a perspective view of an inner side of a mounting surface of the motor vehicle;

Figure 6 is a perspective view of a guide mechanism of the mirror assembly of the subject invention;

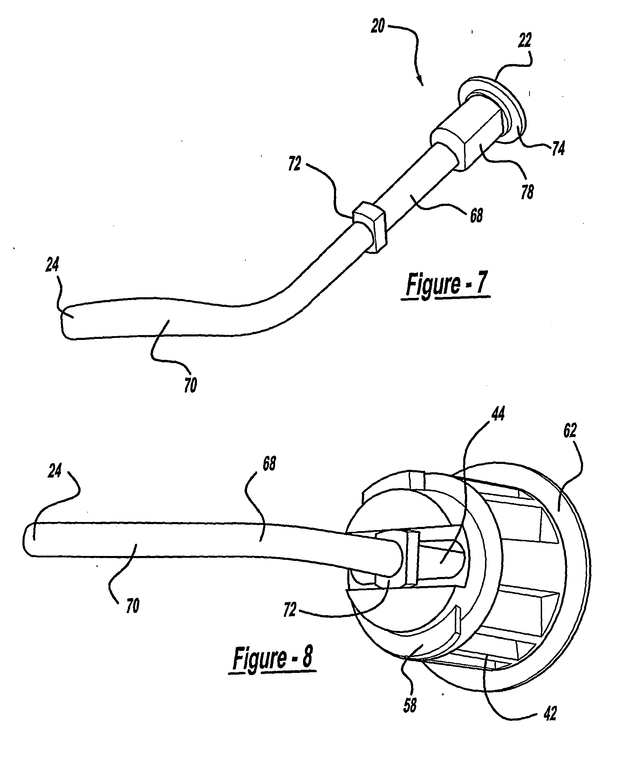

Figure 7 is a perspective view of the handle adjustment mechanism of the mirror assembly;

Figure 8 is an inner perspective view of the handle adjustment mechanism extending through the connector and into the inner side of the mounting surface of the motor vehicle;

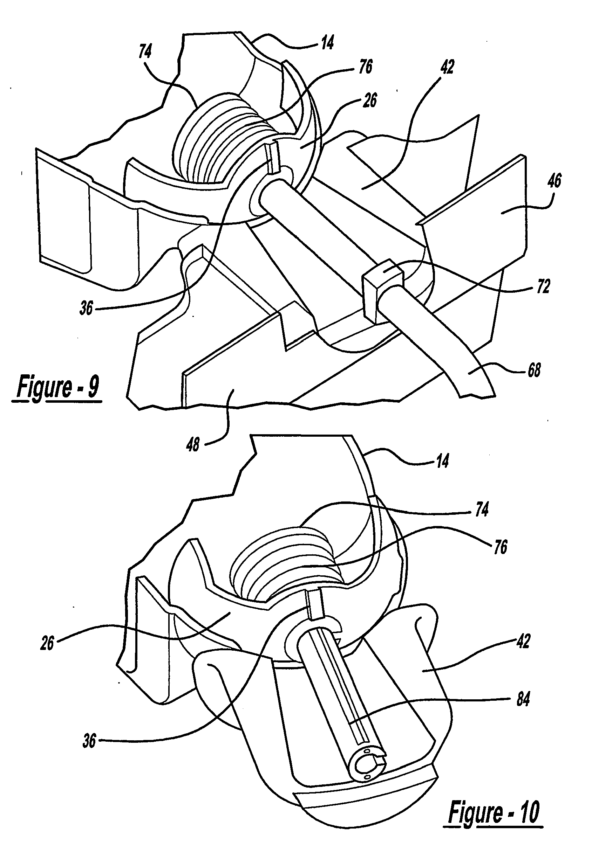

Figure 9 is a perspective view of the mirror assembly having a handle adjustment mechanism;

Figure 10 is a perspective view of the mirror assembly of the subject invention having the harness adjustment mechanism;

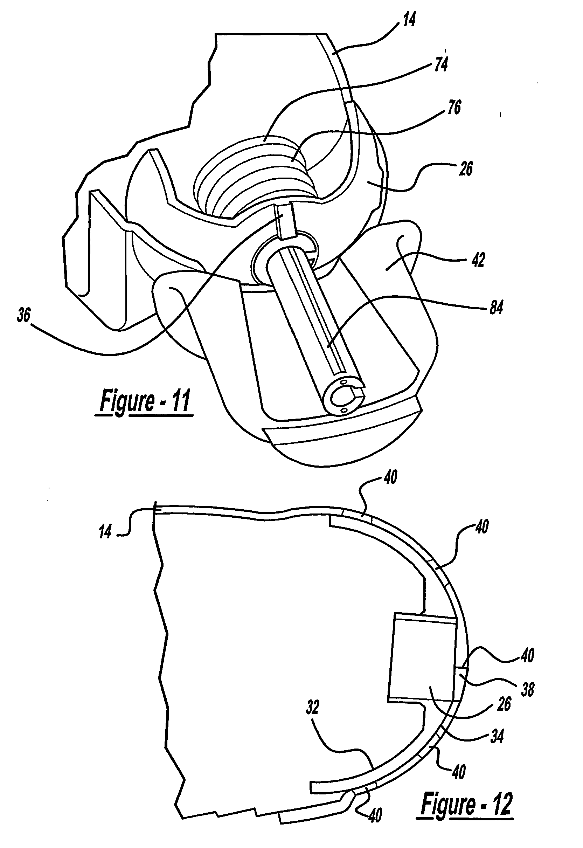

Figure 11 is a perspective view of the mirror assembly of the subject invention having the harness adjustment mechanism and the case moveable; and

Figure 12 is a perspective view of the case of the mirror assembly.

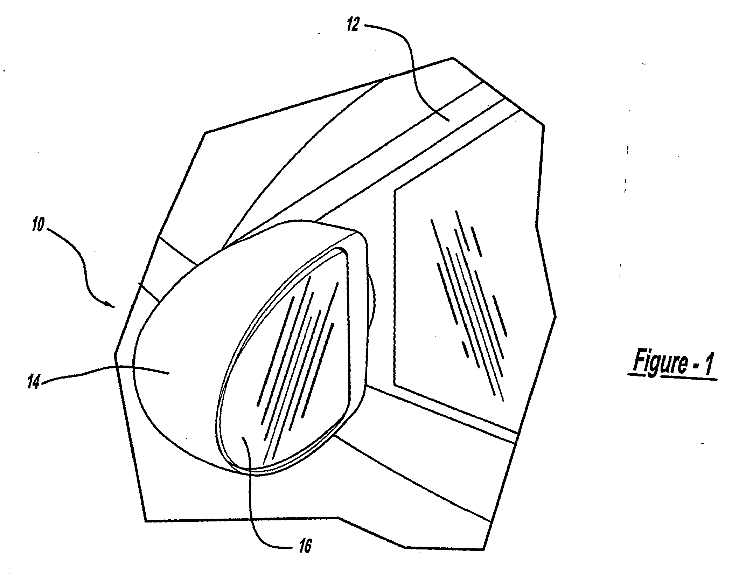

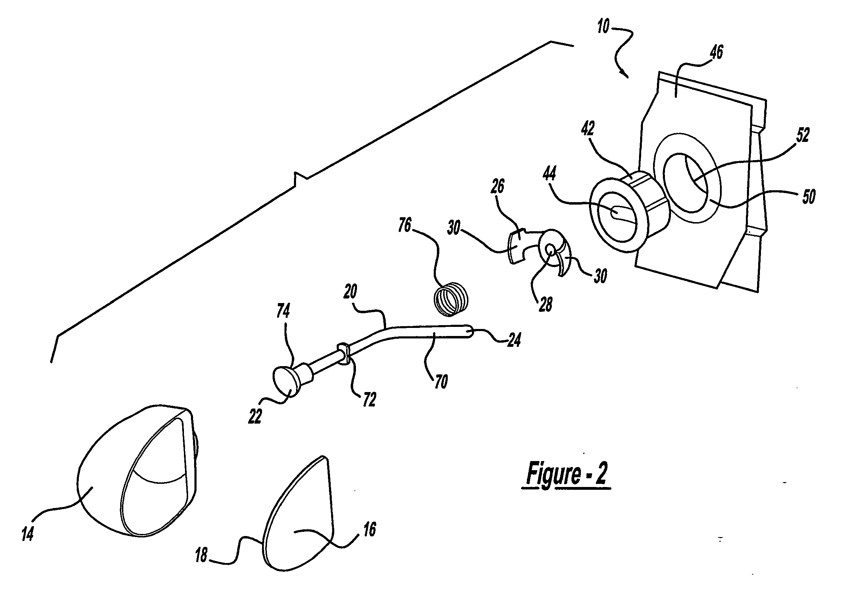

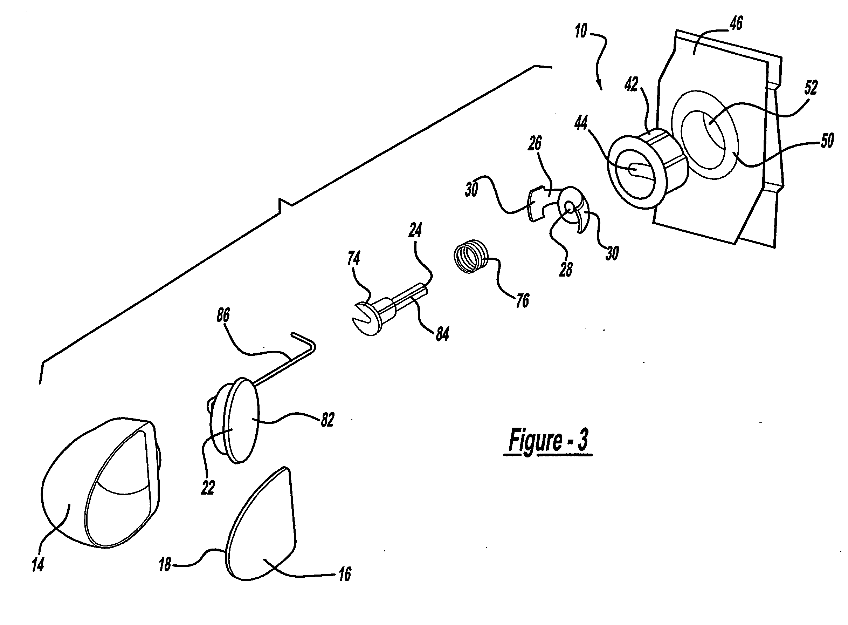

Referring to the Figures, wherein like numerals indicate like or corresponding parts throughout the several views, a mirror assembly is generally shown at 10 in FIG. 1. The mirror assembly 10 is shown attached to the side of a motor vehicle generally shown at 12. The subject invention includes a mirror assembly 10 having two distinct embodiments -, an electrically actuated mirror assembly 10 and a moving case mirror assembly 10. Also described is a handle mirror assembly. All three have the components described herein and shown in Figures 2 and 3.

The mirror assembly includes a case 14 having a generally rectangular shape and a reflective mirror 16 disposed within said case 14. The shape of the reflective mirror 16 and case 14 of the present invention, however, can be of any shape. The reflective mirror 16 includes a back plate 18 that is connected to an adjustment mechanism 20. The adjustment mechanism 20 has a first end 22 and a second end 24. The first end 22 of the adjustment mechanism 20 is attached to the back plate 18 of the reflective mirror 16 by conventional means commonly used in the art.

The case 14 also includes a guide mechanism 26. The guide mechanism 26 has a first aperture 28. With the first end 22 of the adjustment mechanism 20 connected to the back plate 18 of the reflective mirror 16, the second end 24 extends through this first aperture 28 of the guide mechanism 26 to an outer side of the case 14. The guide mechanism 26 also includes wings 30 extending from each side of the first aperture 28. An inner side 32 of the guide mechanism 26 faces the reflective mirror 16 while an outer side 34 faces the motor vehicle. The outer side 34 of the guide mechanism 26 includes a rib 36 and a knob 38. The rib 36 is used to fixedly position the guide mechanism 26 to the case 14 in the handle mirror assembly 10 and electrically actuated mirror assembly 10. The case 14 receives the rib 36 in a slot (not shown) to fixedly position the guide mechanism 26 in the case 14. The knob 38 is used in the third embodiment of the moving case mirror assembly 10. The case 14 in the moving case embodiment includes a plurality of grooves 40. These grooves 40 receive the knob 38 of the guide mechanism 26 as the case 14 rotates about the guide mechanism 26 and the adjustment mechanism 20. Rotating the case 14 permits the mirror assembly 10 to be folded inward against the exterior side of the vehicle 12. Folding the mirror assembly 10 inward reduces the overall width of the vehicle thereby assisting when shipping the vehicle 12 or parking the vehicle 12 in confined spaces.

In order to attach the case 14 of the mirror assembly 10 to the vehicle 12 a connector 42 is positioned between the case 14 and the vehicle 12. The connector 30 contains a second aperture 44 that also receives the second end 24 of the adjustment mechanism 20. The motor vehicle 12 includes a mounting surface 46 having an inner side 48 and an outer side 50. The mounting surface 46 is positioned on the side of the vehicle 12. The mounting surface 46 includes an opening 52. This opening 52 receives the connector 42 and the second end 24 of the adjustment mechanism 20. The connector 42 also includes a threaded hole 54 for receiving a screw 56. The screw 56 is positioned at the inner side 48 of the mounting surface 46 and threadably engages the threaded hole 54 to fixedly attach the connector 42 to the vehicle 12. To further secure the connector 42 to the vehicle 12, the connector 42 includes at least one locking knob 58 that engages an extension 60 in the mounting surface 46. The preferred embodiment illustrates the use of two locking knobs 58 that engage two extensions 60 in the mounting surface 46, however, only one locking knob 58 is required. The locking knob 58 requires that the connector 42 be properly oriented for insertion through the opening 52 of the mounting surface 46. Once inserted through the opening 52, the connector 42 is rotated and then secured to the vehicle 12. In addition to the screw 56, the connector 42 also includes a lip 62 having a locking boss 64. The locking boss 64 is received in a locking embossment 66 on the outer side 50 of the mounting surface 46. Therefore, to properly connect the mirror assembly 10 to the vehicle 12, the connector 42 is orientated to be inserted through the opening 52 of the mounting surface 46 by passing the locking knob 58 through the extension 60 in the mounting surface 46. Once properly inserted, the connector 42 is rotated and the locking boss 64 is received in the locking embossment 66. The lip 62 is positioned flat against the outer side 50 of the mounting surface 46. Finally, the screw 58 is threadably engaged with the threaded hole 54 of the connector 42.

The adjustment mechanism 20 in all three embodiments extends through the first aperture 28 of the guide mechanism 26, the second aperture 44 of the connector 42 and the opening 52 in the mounting surface 46. Accordingly, the second end 24 of the adjustment mechanism 20 is positioned on the inner side 48 of the mounting surface 46 and thereby inside the vehicle 12 and accessible to an operator.

In one unclaimed example, the handle mirror assembly 10, the adjustment mechanism 20 is a handle 68. The handle 68 has a generally tubular shape with and angled extension 70 at the second end 24. The angled extension 70 begins when then handle 68 reaches the inner side 48 of the mounting surface 46. The extension 70 angles toward the operator of the vehicle 12 for manual adjustment of the reflective surface 18. The handle 68 also includes a locking mechanism 72 positioned at the inner side 48 of the mounting surface 46. The locking mechanism 72 is used to limit the vertical adjustment of the reflective surface 18. The locking mechanism 72 is shown as a rectangular extension on the handle 68. The locking mechanism 72 interferes with the connector 42 when moved to maximum upper or lower positions. The interference prevents any further vertical adjustment of the reflective surface 18. The width of the second aperture 44 of the connector 42 limits the horizontal adjustment of the reflective surface 18 in the case 14. The horizontal stroke of the handle 68 is limited when the handle 68 contacts a side surface of the second aperture 44 of the connector 42. To position the handle 68 within the case 14 the adjustment mechanism 20 includes a lip 74. Positioned between the lip 74 and the inner side 32 of the guide mechanism 26 is a biasing device 76. The biasing device 76, most commonly a spring, urges the guide mechanism 26 against the case 14 and the locking mechanism 72 of the handle 68 against the.connector 42, thereby properly positioning the components of the mirror assembly 10. Furthermore, the portion of the handle 68 positioned in the first aperture 28 of the guide mechanism 26 has a flattened surface 78 on one side of the tubular handle 68. This flattened surface 78 mates against a plane 80 within the first aperture 28 of the guide mechanism 26. The mating of the flattened surface 78 and the plane 80 prevents rotation of the handle 68 within the mirror assembly 10. Again, this ensures that the components of the mirror assembly 10 are properly positioned.

In the first embodiment, the electrically actuated mirror assembly 10, the adjustment mechanism 20 includes an electric motor 82 and a harness 84. The electric motor 82 is positioned within the case 14 and is connected to the back plate 18 of the reflective mirror 16. The electric motor 82 actuates movement of the back plate 18 and reflective mirror 16 within the case 14. The electric motor 82 receives power and control signals through electrical controls 86. The electrical controls 86 are connected to the electric motor 82 and extend to inside the vehicle 12. The controls 86 are contained within the harness 86. The harness 84 encapsulates the electronic controls 86 and extends from the electric motor 82 to the inside of the vehicle 12. The harness 84, typically made of plastic, also includes a plurality of strengthening ribs. Similarly configured like the handle 68, the harness 84 also includes a lip 74 and a flattened surface 78. A biasing device 76 is positioned between the lip 74 and the inner side 32 of the guide mechanism 26. As with the handle 68, the flattened surface 78 mates against the plane 80 in the first aperture 28 of the guide mechanism 26 to prevent rotation. The electronic controls 86 extend through the harness 84 and into the vehicle 12. The vehicle 12 will include a control mechanism (not shown) in which the operator commands movement of the reflective mirror 16 within the case 14 and a signal is sent through the electrical controls 86 and received by the electric motor 82.

The final embodiment, the moving case mirror assembly 10, only uses the adjustment mechanism 20 to properly position the components of the mirror assembly 10. This embodiment only includes the harness 84. The harness 84 is positioned as in the electrically actuated mirror assembly 10. The biasing device 76 is positioned between the lip 74 and the inner side 32 of the guide mechanism 26 to properly position the components of the assembly 10. The harness 84 is left hollow. A plug (not shown) conceals the second end 24 of the harness 84 positioned inside the vehicle 12. The plug is strictly provided for aesthetic purposes. The mirror assembly 10 is adjusted by moving the case 14 about the guide mechanism 26. The knob 38 positioned on the outer side 34 of the guide mechanism 26 is received in one of a plurality of grooves 40 in the case 14. The operator manually adjusts the mirror assembly 10. There are no control mechanisms or handles. At a maximum position, the mirror assembly 10 is flat against the side of the vehicle 12.

Both embodiments utilize the same components, thereby reducing the manufacturing costs for producing the vehicle 12. All assemblies 10 use the same case 14, guide mechanism 26 and connector 42. The only component that varies is the type of adjustment mechanism 20 - either the handle 68, electric motor 82 with harness 84 or the harness 84 alone. The simplicity of alternating the adjustment mechanism 20 to accommodate various options with each vehicle 12 reduces the overall production costs and assembly efforts.

## Claims

1. A mirror assembly (10) for use on a motor vehicle (12) comprising:
a mounting surface (46) having an inner side (48) and an outer side (50) and an opening (52) disposed therebetween;
a case (14);
a reflective mirror (16) disposed within said case (14);
a guide mechanism (26) fixedly positioned within said case (14) and having a first aperture (28);
a connector (42) having a second aperture (44) and positioned between said case (14) and said inner side (48) of said mounting surface (46); and **characterised by**:
a harness (84) having a first end connected to said reflective mirror (16) and a second end extending through said first aperture (28) of said guide mechanism (26), said second aperture (44) of said connector (42) and said opening of said mounting surface (46);
said guide mechanism (26) including wings (30) extending from each side of said first aperture (28).

2. A mirror assembly as described in claim 1 including an electric motor (82) disposed in said case (14) for actuating movement of said reflective mirror (16) via an electronic control mechanism (86) positioned inside the motor vehicle (12).

3. A mirror assembly as described in claim 1 wherein said harness (84) is molded from plastic and includes a plurality of strengthening ribs.

4. A mirror assembly as described in claim 1 including a biasing device (76) for properly positioning said guide mechanism (26) and said harness (84) within said case (14).

5. A mirror assembly as described in claim 1, wherein said case (14) has a plurality of grooves (40) for receiving a knob (38) on said guide mechanism (26), wherein said case (14) is moveable about said guide mechanism (26).

6. A mirror assembly as described in claim 1 further comprising an adjustment mechanism (82) having a first end (22) connected to said reflective mirror (16) and a second end (24) extending through said first aperture (28) of said guide mechanism (26), said second aperture (44) of said connector (42) in said opening (52) of said mounting surface (46).

7. A mirror assembly as described in claim 1 wherein said connector (42) has an inner end and an outer end.

8. A mirror assembly as described in claim 7 wherein said connector (42) further includes a lip (62) having a locking boss (64) at said outer end.

9. A mirror assembly as described in claim 8 wherein said mounting surface (46) has a locking embossment (66) on said outer side for receiving said locking boss (64) of said connector (42).

10. A mirror assembly as described in claim 9 wherein said mounting surface (46) further includes a screw (56) at said inner side for attaching said connector (42) to said mounting surface (46).

11. A mirror assembly as described in claim 10 wherein said inner end of said connector (42) includes at least one locking knob (58).

12. A mirror assembly as described in claim 11 wherein said inner end of said connector (42) further includes a threaded hole (54) for receiving said screw (56) of said mounting surface (46).

13. A mirror assembly as described in claim 12 wherein said opening (52) of said mounting surface (46) includes at least one extension (60) for receiving said locking knob (58).

14. A mirror assembly as described in claim 6 wherein said first aperture (28) of said guide mechanism (26) includes a plane to prevent rotation of said adjustment mechanism (20) while in said first aperture (28).

15. A mirror assembly as described in claim 6 wherein said adjustment mechanism is an electric motor (82) and said harness (84) encapsulates electronic controls (86) for controlling adjustment of said reflective mirror (16) in said case (14).

16. A mirror assembly as described in claim 15 wherein said guide mechanism (26) includes a rib (36) for fixedly positioning said guide mechanism (26) to said case (14).

17. A mirror assembly as described in claim 6 wherein said case (14) is moveable around said adjustment mechanism (20) and said guide mechanism (26).

18. A mirror assembly as described in claim 17 wherein said case (14) includes a plurality of grooves (40) for receiving a knob (38) on said guide mechanism (26).

19. A mirror assembly as described in claim 5 wherein said adjustment mechanism (20) includes a biasing device (76) for properly positioning said adjustment mechanism (20) and said guide mechanism (26) within said case (14).

## Patentansprüche

1. Spiegelanordnung (10) zur Verwendung in einem Kraftfahrzeug (12) aufweisend:
- eine Befestigungsfläche (46) mit einer Innenseite (48) und einer Aussenseite (50) und einer Öffnung (52), die dazwischen angeordnet ist;
- ein Gehäuse (14);
- einen Reflektionsspiegel (16), der innerhalb des Gehäuses (14) angeordnet ist;
- eine Führungsvorrichtung (26), die fest in dem Gehäuse (14) angeordnet ist, und eine erste Öffnung (28) aufweist;
- einen Verbinder (42), der eine zweite Öffnung (44) aufweist und zwischen dem Gehäuse (14) und der Innenseite (48) der Befestigungsfläche (46) angeordnet ist; wobei
- ein Kabelbaum (84) ein erstes Ende aufweist, das mit dem Reflektionsspiegel (16) verbunden ist, und ein zweites Ende, das sich durch die erste Öffnung (28) der Führungsvorrichtung (26), die zweite Öffnung (44) des Verbinders (42) und die Öffnung der Befestigungsfläche (46) erstreckt;
- die Führungsvorrichtung (26) Fortsätze (30) enthält, die sich von jeder Seite der ersten Vorrichtung (28) erstrecken.

2. Spiegelanordnung nach Anspruch 1, die einen Elektromotor (82) enthält, der in dem Gehäuse (14) angebracht ist, um eine Bewegung des Reflektionsspiegels (16) über einen elektronischen Steuermechanismus (86) anzutreiben, der innerhalb des Motorfahrzeugs (12) untergebracht ist.

3. Spiegelanordnung nach Anspruch 1, wobei der Kabelbaum (84) aus Plastik geformt ist und eine Mehrzahl von Verstärkungsrippen enthält.

4. Spiegelanordnung nach Anspruch 1, die eine Vorspanneinrichtung (76) enthält, um die Führungsvorrichtung (26) und den Kabelbaum (84) innerhalb des Gehäuses (14) richtig anzuordnen.

5. Spiegelanordnung nach Anspruch 1, wobei das Gehäuse (14) eine Mehrzahl von Nuten (40) zum Aufnehmen eines Knopfes (38) auf der Führungsvorrichtung (26) aufweist, wobei das Gehäuse (14) um die Führungsvorrichtung (26) beweglich ist.

6. Spiegelanordnung nach Anspruch 1, welche weiterhin eine Einstellvorrichtung (82) aufweist, die ein erstes Ende (22) aufweist, das mit dem Reflektionsspiegel (16) verbunden ist, und ein zweites Ende (24), das sich durch die erste Öffnung (28) der Führungsvorrichtung (26), die zweite Öffnung (44) des Verbinders (42) in der Öffnung (52) der Befestigungsfläche (46) erstreckt.

7. Spiegelanordnung nach Anspruch 1, wobei der Verbinder (42) ein inneres Ende und ein äusseres Ende aufweist.

8. Spiegelanordnung nach Anspruch 7, wobei der Verbinder (42) weiterhin eine Lippe (62) aufweist, die einen Führungsfortsatz (64) am äusseren Ende aufweist.

9. Spiegelanordnung nach Anspruch 8, wobei die Befestigungsfläche (46) eine Einprägung (66) zur Verriegelung auf der Aussenseite aufweist, um den Führungsfortsatz (64) des Verbinders (42) aufzunehmen.

10. Spiegelanordnung nach Anspruch 9, wobei die Befestigungsfläche (46) weiterhin auf der Innenseite eine Schraube (56) aufweist, um den Verbinder (42) an der Befestigungsfläche (46) anzubringen.

11. Spiegelanordnung nach Anspruch 10, wobei das innere Ende des Verbinders (42) zumindest einen Verschlussknopf (58) aufweist.

12. Spiegelanordnung nach Anspruch 11, wobei das innere Ende des Verbinders (42) weiterhin eine Gewindebohrung (54) zum Aufnehmen der Schraube (56) der Befestigungsfläche (46) aufweist.

13. Spiegelanordnung nach Anspruch 12, wobei die Öffnung (52) der Befestigungsfläche (46) zumindest eine Verlängerung (60) zum Aufnehmen des Verschlussknopfes (58) aufweist.

14. Spiegelanordnung nach Anspruch 6, wobei die erste Öffnung (28) der Führungsvorrichtung (26) eine Ebene aufweist, um die Drehung der Einstellvorrichtung (20) zu verhindern, während sie sich in der ersten Öffnung (28) befindet.

15. Spiegelanordnung nach Anspruch 6, wobei die Einstellvorrichtung ein Elektromotor (82) ist, und der Kabelbaum (84) eine elektronische Steuerung (86) zum Steuern der Einstellung des Reflektionsspiegels (16) in dem Gehäuse (14) ummantelt.

16. Spiegelanordnung nach Anspruch 15, wobei die Führungsvorrichtung (26) eine Rippe (36) enthält, um die Führungsvorrichtung (26) fest in dem Gehäuse zu positionieren.

17. Spiegelanordnung nach Anspruch 6, wobei das Gehäuse (14) um die Einstellvorrichtung (20) und die Führungsvorrichtung (26) beweglich ist.

18. Spiegelanordnung nach Anspruch 17, wobei das Gehäuse (14) eine Mehrzahl von Nuten (40) zum Aufnehmen eines Knopfes (38) auf der Führungsvorrichtung (26) aufweist.

19. Spiegelanordnung nach Anspruch 5, wobei die Einstellvorrichtung (20) eine Vorspanneinrichtung (76) zum richtigen Positionieren der Einstellvorrichtung (20) und der Führungsvorrichtung (26) innerhalb des Gehäuses (14) aufweist.

## Revendications

1. Ensemble rétroviseur (10) pour une utilisation sur véhicule à moteur (12) comprenant:
- une surface de montage (46) ayant une face intérieure (48) et une face externe (50) et un orifice (52) interposé entre celles-ci;
- un boîtier (14);
- un miroir réfléchissant (16) disposé au sein dudit boîtier (14);
- un mécanisme de guidage (26) placé fixement à l'intérieur dudit boîtier (14) et ayant une première ouverture (28);
- un raccord (42) ayant une seconde ouverture (44) et placé entre ledit boîtier (14) et ladite face interne (48) de ladite surface de montage (46), et
**caractérisé par**:
un harnais (84) ayant une première extrémité reliée audit miroir réfléchissant (16) et une seconde extrémité passant au travers de ladite première ouverture (28) dudit mécanisme de guidage (26), de ladite seconde ouverture (44) dudit raccord (42) et dudit orifice de ladite surface de montage (46);
ledit mécanisme de guidage (26) comprenant des ailettes (30) s'étendant de chaque côté de ladite première ouverture (28).

2. Ensemble rétroviseur selon la revendication 1, comprenant un moteur électrique (82) placé dans ledit boîtier (14) pour actionner le mouvement dudit miroir réfléchissant (16) par le biais d'un mécanisme de commande électronique (86) positionné à l'intérieur du véhicule à moteur (12).

3. Ensemble rétroviseur selon la revendication 1, **caractérisé en ce que** ledit harnais (84) est moulé à partir de plastique et présente une multitude de nervures de renforcement.

4. Ensemble rétroviseur selon la revendication 1, présentant un dispositif de sollicitation (76) pour positionner correctement ledit mécanisme de guidage (26) et ledit harnais (84) au sein dudit boîtier (14).

5. Ensemble rétroviseur selon la revendication 1, **caractérisé en ce que** ledit boîtier (14) a une multitude de rainures (40) pour la réception d'un bouton (38) dudit mécanisme de guidage (26), **caractérisé en ce que** ledit boîtier (14) est mobile autour dudit mécanisme de guidage (26).

6. Ensemble rétroviseur selon la revendication 1, comprenant en outre un mécanisme de réglage (82) ayant une première extrémité (22) connecté au dit miroir réfléchissant (16) et une seconde extrémité (24) passant au travers de ladite première ouverture (28) dudit mécanisme de guidage (26), de ladite seconde ouverture (44) dudit raccord (42) dans ledit orifice (52) de ladite surface de montage (46).

7. Ensemble rétroviseur selon la revendication 1, **caractérisé en ce que** ledit raccord (42) a une extrémité intérieure et une extrémité extérieure.

8. Ensemble rétroviseur selon la revendication 7, **caractérisé en ce que** le raccord (42) présente en outre une lèvre (62) comprenant une protubérance de blocage (64) sur ladite extrémité extérieure.

9. Ensemble rétroviseur selon la revendication 8, **caractérisé en ce que** la surface de montage (46) a un bossage de verrouillage (66) sur ladite face externe afin de recevoir ladite protubérance de blocage (64) dudit raccord (42).

10. Ensemble rétroviseur selon la revendication 9, **caractérisé en ce que** ladite surface de montage (46) comprend en outre une vis (56) sur ladite face interne afin de joindre ledit raccord (42) à ladite surface de montage (46).

11. Ensemble rétroviseur selon la revendication 10, **caractérisé en ce que** ladite extrémité intérieure dudit raccord (42) comprend au moins un bouton de verrouillage (58).

12. Ensemble rétroviseur selon la revendication 11, **caractérisé en ce que** ladite extrémité intérieure dudit raccord (42) comprend en outre un trou fileté (54) pour la réception de ladite vis (56) de ladite surface de montage (46).

13. Ensemble rétroviseur selon la revendication 12, **caractérisé en ce que** ledit orifice (52) de ladite surface de montage (46) comprend au moins une extension (60) pour la réception dudit bouton de verrouillage (58).

14. Ensemble rétroviseur selon la revendication 6, **caractérisé en ce que** ladite première ouverture (28) dudit mécanisme de guidage (26) comprend une surface plane afin d'empêcher la rotation dudit mécanisme de réglage (20) dans ladite première ouverture (28).

15. Ensemble rétroviseur selon la revendication 6, **caractérisé en ce que** ledit mécanisme de réglage est un moteur électrique (82) et ledit harnais (84) renferme des commandes électroniques (86) pour le contrôle du réglage dudit miroir réfléchissant (16) dans ledit boîtier (14).

16. Ensemble rétroviseur selon la revendication 15, **caractérisé en ce que** ledit mécanisme de guidage (26) comprend une nervure (36) pour positionner fixement ledit mécanisme de guidage (26) audit boîtier (14).

17. Ensemble rétroviseur selon la revendication 6, **caractérisé en ce que** ledit boîtier (14) est mobile autour dudit mécanisme de réglage (20) et dudit mécanisme de guidage (26).

18. Ensemble rétroviseur selon la revendication 17, **caractérisé en ce que** ledit boîtier (14) comprend une multitudes de rainures (40) pour la réception d'un bouton (38) dudit mécanisme de guidage (26).

19. Ensemble rétroviseur selon la revendication 5, **caractérisé en ce que** ledit mécanisme de réglage (20) comporte un dispositif de sollicitation (76) pour positionner correctement ledit mécanisme de réglage (20) et ledit mécanisme de guidage (26) au sein dudit boîtier (14).
